# FASCICULE DE BREVET EUROPEEN

(11) **EP 4 526 210 B1**
(45) Date de publication et mention de la délivrance du brevet: **12.08.2026**
(21) Numéro de dépôt: 23727281.0
(22) Date de dépôt: 12.05.2023
(51) Int. Cl.: B64D 15/16, B06B 1/06, B64C 11/24, B64C 27/46, F01D 5/14, F03D 1/06, F01D 25/02, F02C 7/04, F03D 80/40

(54) **SYSTÈME DE DÉGIVRAGE POUR UNE PIÈCE MÉCANIQUE, COMPRENANT AU MOINS UN ACTIONNEUR PIÉZOÉLECTRIQUE**
ENTFROSTUNGSSYSTEM FÜR EIN MECHANISCHES TEIL, MIT MINDESTENS EINEM PIEZOELEKTRISCHEN AKTUATOR
DE-ICING SYSTEM FOR A MECHANICAL PART, COMPRISING AT LEAST ONE PIEZOELECTRIC ACTUATOR

(30) Priorité: 16.05.2022 FR 2204615
(43) Date de publication de la demande: 26.03.2025
(73) Titulaire: Pytheas Technology, 13600 La Ciotat (FR); Avions de Transports Régional GIE (ATR), 31712 Blagnac (FR)
(72) Inventeur: MOSCA, Frederic, 13590 MEYREUIL (FR); CLEMENT, Simon, 13590 MEYREUIL (FR); AUBRY, Alice, 13590 MEYREUIL (FR)
(74) Mandataire: Roman, Alexis
(86) Numéro de dépôt international: PCT/EP2023/062813
(87) Numéro de publication internationale: WO 2023/222549

(56) Documents cités:
- EP-B1- 3 390 228
- CA-A1- 2 770 812
- CN-A- 109 436 338
- CN-A- 113 148 181
- GB-A- 2 472 053
- US-A1- 2021 078 711

## Description

### Domaine technique.

La présente invention a pour objet un système de dégivrage pour une pièce mécanique, comprenant au moins un actionneur piézoélectrique. Un tel système de dégivrage est particulièrement - mais non exclusivement - adapté à une pale d'éolienne, un bord d'attaque d'aéronef ou à une pale de turbomachine. L'invention a également pour objet un procédé de dégivrage d'une pièce mécanique, utilisant le système de dégivrage susmentionné.

De manière générale, l'invention a trait au domaine technique du dégivrage, et plus particulièrement, aux systèmes de dégivrage utilisant des actionneurs piézoélectriques. Ces systèmes de dégivrage sont particulièrement avantageux dans le domaine des énergies renouvelables, tels que l'énergie éolienne, et de l'aéronautique. Ces domaines techniques sont en revanche non limitatifs, les systèmes de dégivrages selon l'invention pouvant être facilement adaptés à d'autres domaines techniques non cités.

### État de la technique.

Certaines pièces mécaniques, notamment dans l'aéronautique, peuvent être soumises à des températures extrêmes. En effet, les changements d'altitudes peuvent entraîner une forte baisse des températures. Du givre peut alors se former sur certaines pièces des moteurs d'avions, telles que les pales ou les aubes, ou encore sur les ailes ou l'empennage arrière. L'accumulation de givre peut changer drastiquement les caractéristiques physiques de la pièce et entraîner une diminution des performances du moteur, ou un changement du comportement aérodynamique des ailes et de l'empennage. Il en est de même sur les éoliennes, où la présence de givre sur les pales peut également diminuer les performances, notamment en termes de rendement.

C'est pourquoi de nombreux systèmes de dégivrage, pour diverses pièces mécaniques, ont été développés. Les systèmes de dégivrage les plus courants sont des systèmes thermiques dont la chaleur produite permet de dégivrer la pièce. Mais ces systèmes ont une consommation énergétique très élevée.

D'autres systèmes utilisent des produits chimiques, mais ceux-ci posent problème quant à leur masse, parce qu'ils nécessitent de grands volumes de produits pour permettre le dégivrage. De plus, ces produits ne sont généralement pas respectueux de l'environnement.

Aussi, des systèmes de dégivrage de type « mécanique » utilisant des actionneurs piézoélectriques ont de plus en plus été développés pour mettre en vibration la pièce à dégivrer. Ceux-ci sont en effet compacts et légers, ont un coût énergétique faible et sont écologiques.

Le document de brevet publié EP 2 433 868 B1 divulgue un système de dégivrage de pièces mécaniques pour l'aéronautique. Ce système comprend des dispositifs émettant des ultrasons, tels que des actionneurs piézoélectriques, positionnés contre une surface interne de la pièce. Ces actionneurs piézoélectriques sont insérés dans des logements et sont commandés par une unité de commande qui permet leur activation. Mais ces actionneurs piézoélectriques sont difficiles à industrialiser et sont intégrés dans une structure de maintien relativement complexe à réaliser et de fait coûteuse. De plus, ils sont peu adaptables à des surfaces courbes.

Le document de brevet publié EP3390228A1 divulgue un dispositif de dégivrage comportant un actionneur présentant une partie fixe et une partie mobile conçue pour alternativement s'écarter et se rapprocher de la partie fixe, un élément intermédiaire comportant une partie de sollicitation agencée pour être poussée par la partie mobile de l'actionneur lorsque la partie mobile de l'actionneur s'écarte de la partie fixe, et une partie de transmission de mouvement conçue pour se déplacer en fonction du déplacement de la partie de sollicitation et destinée à pousser une pièce à dégivrer pour déformer la pièce à dégivrer. D'autres systèmes de dégivrage sont divulgués dans les documents de brevet US2021078711A1, CN113148181A, CA2770812A1, GB2472053A et CN109436338A.

Le document de brevet publié US 9,155,430 B2 divulgue un système de dégivrage pour pare-brise de véhicule automobile comprenant des actionneurs piézoélectriques. Une méthode de dégivrage dudit pare-brise est également décrite. Cette méthode comprend une première étape de transmission d'ondes ultrasoniques à la surface de la pièce mécanique, puis une seconde étape de propagation desdites ondes au travers de la pièce. La propagation des ondes permet d'augmenter la température de la pièce, donc son dégivrage. Mais en pratique, ce type de système ne permet pas un dégivrage très performant dans la mesure où la durée d'un tel dégivrage est particulièrement longue et dépend fortement de l'épaisseur du givre sur le pare-brise. De plus, les actionneurs piézoélectriques sont collés sur la pièce à dégivrer, ce qui les rend peu robustes aux contraintes mécaniques, aux chocs, et à l'humidité. Leur maintenance est en outre relativement complexe, voire impossible.

L'invention vise à pallier tout ou partie des inconvénients de l'état de la technique susmentionné. Plus particulièrement, l'invention a pour objectif de proposer un système de dégivrage à actionneur piézoélectrique dont l'efficacité du dégivrage est améliorée par rapport aux systèmes de l'art antérieur. L'invention a également pour objectif de proposer un système de dégivrage dont la robustesse est améliorée par rapport aux systèmes de l'art antérieur. L'invention a encore pour objectif de proposer un système de dégivrage dont la conception et la maintenance sont plus simples et moins couteuses par rapport aux systèmes de l'art antérieur.

### Présentation de l'invention.

La solution proposée par l'invention est un système de dégivrage selon la revendication 1 configuré pour être monté sur une surface d'une pièce mécanique à dégivrer, ledit système comprenant au moins : - un actionneur piézoélectrique ; un dispositif de fixation configuré pour fixer l'actionneur sur la surface ; - au moins une unité de commande configurée pour activer l'actionneur de manière à ce qu'il excite la pièce pour la dégivrer.

Ce système est remarquable en ce que l'actionneur comprend une structure d'empilement d'éléments piézoélectriques précontraints agissant selon un axe longitudinal dudit actionneur. De plus, le dispositif de fixation est configuré pour fixer rigidement l'actionneur de sorte que l'axe longitudinal soit parallèle à la surface. En outre, le dispositif de fixation comprend un élément de fixation positionné à chacune des deux extrémités de l'actionneur (9), lesquels éléments de fixation sont configurés de sorte que l'activation dudit actionneur entraîne l'excitation de la pièce selon des modes d'extension et de flexion.

L'actionneur piézoélectrique selon l'invention présente une structure d'empilement d'éléments piézoélectriques précontraints (ci-après « pilier piézoélectrique précontraint ») offrant une excellente tenue aux chocs, à l'humidité, au cyclage dans le temps, aux efforts, ainsi qu'une réparabilité et une maintenance simplifiées. En outre, après de multiples essais, la demanderesse a constaté que l'orientation du pilier piézoélectrique précontraint parallèlement à la surface et son mode de fixation à ses deux extrémités, offre la possibilité de mettre en vibration et d'exciter la pièce à la fois selon ses modes d'extension mais également selon ses modes de flexion. La capacité à pouvoir exciter ces deux types de modes permet d'obtenir un système de dégivrage ayant une large faculté d'adaptation, dans la mesure où il est opérationnel dans de multiples conditions d'utilisation.

Le positionnement parallèle de l'actionneur par rapport à la surface de la pièce permet en outre d'éviter que des efforts importants dommageables ne soient supportés par la pièce lorsque celle-ci subit des accélérations importantes, ce qui peut être le cas dans le domaine de l'aéronautique.

D'autres caractéristiques avantageuses de l'appareil objet de l'invention sont listées ci-dessous. Chacune de ces caractéristiques peut être considérée seule ou en combinaison avec les caractéristiques remarquables définies ci-dessus, dans la mesure où elles entrent dans le champ d'application des revendications annexées. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
- Selon un mode de réalisation, la fixation de l'actionneur au moyen des éléments de fixation est telle que la distance entre ledit actionneur et la surface est comprise entre 0 et 10 mm, préférentiellement entre 3 mm et 8 mm.
- Selon un mode de réalisation, la distance est réglable.
- Selon un mode de réalisation, l'unité de commande est configurée pour activer l'actionneur selon une fréquence comprise entre 1 KHz et 200 KHz et selon une tension comprise entre 100 V et 400 V.
- Selon un mode de réalisation, l'unité de commande est configurée pour activer l'actionneur à une fréquence inférieure ou égale à sa fréquence de résonance.
- Selon un mode de réalisation, un contrepoids est positionné à chacune des deux extrémités de l'actionneur, lesdits contrepoids étant identiques et disposés symétriquement par rapport au milieu dudit actionneur.
- Selon un mode de réalisation, la masse des contrepoids est telle que la fréquence de résonance de l'actionneur correspond à la fréquence de résonance d'un mode de vibration de la pièce à dégivrer.
- Selon un mode de réalisation, l'actionneur est connecté à un deuxième circuit configuré pour faire fonctionner ledit actionneur selon un mode de détection de givre.
- Selon un mode de réalisation, le deuxième circuit comprend un générateur de tension utilisé pour activer l'actionneur selon une tension comprise entre 1 mV et 10 V et un moyen d'analyse d'impédance dudit actionneur.
- Selon un mode de réalisation, les données d'analyse d'impédance de l'actionneur sont utilisées par l'unité de commande pour mesurer et/ou évaluer l'épaisseur du givre sur la pièce.
- Selon un mode de réalisation, l'unité de commande est couplée à un commutateur présentant au moins deux positions : une première position dans laquelle l'actionneur est connecté à un premier circuit configuré pour faire fonctionner ledit actionneur selon un mode de dégivrage, et une deuxième position dans laquelle ledit actionneur est connecté au deuxième circuit configuré pour faire fonctionner ledit actionneur selon le mode de détection de givre.
- Selon un mode de réalisation, le commutateur est commuté dans la première position qu'à la condition que l'épaisseur du givre mesurée et/ou évaluée est égale ou supérieure à une valeur seuil prédéterminée.

L'invention concerne également un procédé de dégivrage d'une pièce mécanique, selon la revendication 14, comprenant les étapes suivantes : - transmission d'une excitation à la pièce mécanique par un ou plusieurs actionneurs piézoélectriques d'un système de dégivrage ; - propagation de l'excitation dans la pièce mécanique, de manière à permettre le dégivrage de ladite pièce.

Ce procédé est remarquable en ce que le système est conforme à l'une des caractéristiques précitées. En outre, le procédé comprend une étape d'activation du ou des actionneurs piézoélectriques par l'unité de commande, à condition que l'épaisseur de givre sur la pièce soit égale ou supérieure à une valeur seuil, l'étape d'activation étant antérieure à l'étape de transmission de l'excitation.

Selon un mode de réalisation, le procédé comprend, en outre, une étape de détection de givre sur la pièce antérieure à l'étape d'activation.

Selon un mode de réalisation, le procédé comprend une étape de mesure et/ou d'évaluation de l'épaisseur du givre, située entre l'étape de détection et l'étape d'activation.

L'invention concerne encore une pièce mécanique comprenant au moins un système de dégivrage conforme à l'une des caractéristiques précitées, lequel système est positionné sur une surface interne ou externe de la pièce.

Selon un mode de réalisation, la pièce est une pale d'éolienne ou d'aéronef, ou une aube de turbomachine d'aéronef.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] est une coupe transversale d'une pièce équipée d'un système de dégivrage selon l'invention ;
[Fig. 2] schématise un premier mode de réalisation d'un système de dégivrage selon l'invention ;
[Fig. 3] schématise un deuxième mode de réalisation d'un système de dégivrage selon l'invention ;
[Fig. 4] Schématise une courbe de variation d'impédance (Z) d'un actionneur piézoélectrique en fonction de la fréquence d'activation (f) ;
[Fig. 5] illustre un exemple d'architecture d'un système conforme à l'invention et combinant une fonction dégivrage et une fonction détection de givre ;
[Fig. 6] est un schéma représentant les différentes étapes d'un procédé selon l'invention.

### Description des modes de réalisation,

L'invention peut mettre en œuvre un ou plusieurs programmes informatiques exécutés par des équipements. Par souci de clarté, il faut comprendre au sens de l'invention que « *une étape consiste* à *faire quelque chose* », *« un équipement fait quelque chose* » ou que « *le programme informatique fait quelque chose »,* signifient « *le programme informatique exécuté par une unité de traitement fait quelque chose ».*

Le cas échéant et pour éventuellement compléter leur définition courante, les précisions suivantes sont apportées à certains termes utilisés dans les revendications et la description :
- Les adjectifs « interne » et « externe » définissent le positionnement d'une surface de la pièce mécanique ; une surface interne désignant une surface intérieure à la pièce, et une surface externe désignant une surface extérieure à la pièce.
- Une étape antérieure à une autre étape désigne une étape qui a lieu avant ladite autre étape. De même, une étape postérieure à une autre étape désigne une étape qui a lieu après ladite autre étape.
- Tel qu'utilisé ici, sauf indication contraire, l'éventuelle utilisation des adjectifs ordinaux « premier », « deuxième », etc., pour décrire un objet ou une étape indique simplement que différentes occurrences d'objets ou d'étapes similaires sont mentionnées et n'implique pas que les objets ou étapes ainsi décrits doivent être dans une séquence donnée, que ce soit dans le temps, dans l'espace, dans un classement ou de toute autre manière.
- « X et/ou Y » signifie : X seul ou Y seul ou X+Y.
- D'une manière générale, on appréciera que sur les différents dessins annexés, les objets sont arbitrairement dessinés pour faciliter leur lecture

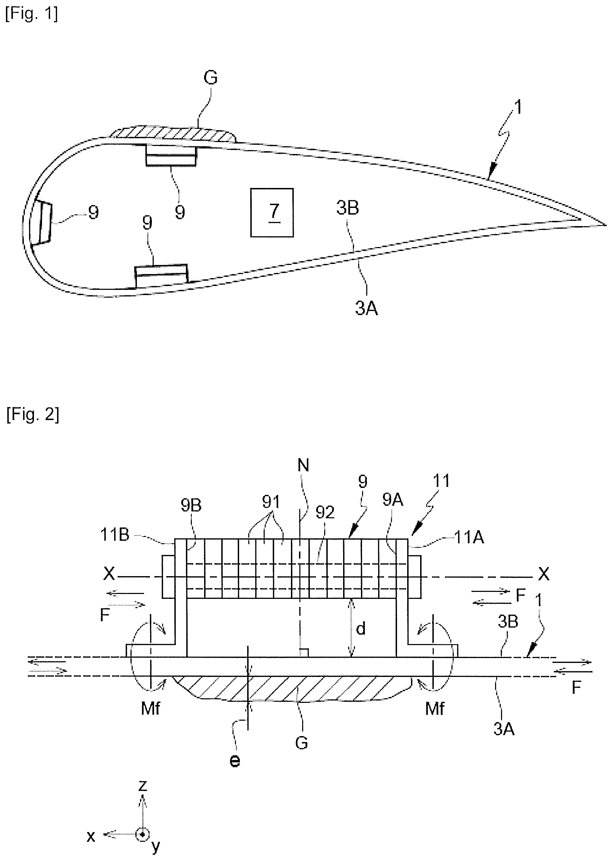

La figure 1 représente une coupe transversale d'une pièce mécanique 1, plus spécifiquement d'une pale d'éolienne ou d'aéronef. La pièce mécanique 1 comprend ici une structure 3 creuse ayant une surface interne 3B et une surface externe 3A. Cette structure 3 est généralement réalisée dans des matériaux légers, connus de l'homme du métier, par exemple des tôles d'aluminium. A titre illustratif seulement, la description qui suit fait référence au dégivrage de la pale 1 à la surface 3A de laquelle s'est accumulé du givre G. Mais le système de dégivrage objet de l'invention s'applique toutefois à n'importe quel type de pièce mécanique devant être dégivrée, telles que des ailes et/ou gouvernes d'aéronefs, des vitres, des entrées d'aération, des parois d'une chambre froide, etc.

Sur la figure 1, le système de dégivrage comprend un ou plusieurs actionneurs piézoélectriques 9, chacun fixé sur la surface de la pièce 1 au moyen d'un dispositif de fixation. Les actionneurs piézoélectriques 9 sont préférentiellement fixés sur la surface interne 3B mais pourraient être fixés sur la surface externe 3A selon les applications.

Au moins une unité de commande 7 est configurée pour activer le ou les actionneurs 9 de manière à ce qu'il excite la pièce 1 pour la dégivrer. En pratique, lorsque les actionneurs 9 sont activés par l'unité 7, ils mettent en vibration la pièce 1, lesquelles vibrations permettent d'enlever tout ou partie du givre G.

L'unité de commande 7 peut se présenter sous la forme d'un processeur, microprocesseur, CPU (pour Central Processing Unit) et associé à une mémoire dans laquelle sont enregistrés un ou plusieurs programmes informatiques, dont les instructions de code, lorsqu'elles sont exécutées par ledit processeur, microprocesseur ou CPU, permettent de réaliser les étapes et/ou fonctionnalités décrites plus avant dans la description. Une seule unité 7 peut assurer l'activation d'un ou de plusieurs actionneurs 9 simultanément ou séquentiellement. Il est également possible d'avoir plusieurs unités de commande 7 qui activent chacune un ou plusieurs actionneurs piézoélectriques dans une zone déterminée de la pièce 1, pour un dégivrage spécifique et/ou localisé dans cette zone. La ou les unités 7 peuvent être installées dans la structure 3 ou à distance de celle-ci.

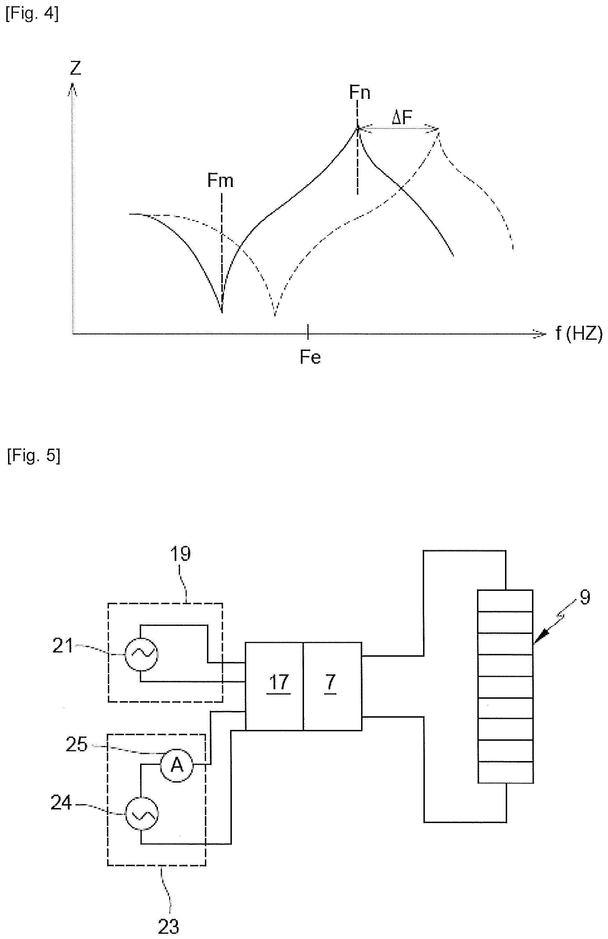

Le ou les actionneurs 9 peuvent également être utilisés pour détecter le givre G et le cas échéant mesurer/évaluer son épaisseur e, entre deux phases de dégivrage. Un même actionneur 9 a donc une double fonction : dégivrage et détection de givre. L'unité 7 peut alors adapter la fréquence d'activation du ou des actionneurs 9 en conséquence. Le fonctionnement d'un actionneur en mode « détection de givre » est détaillé plus avant dans la description en référence aux figures 4 et 5.

Les actionneurs piézoélectriques 9, l'unité de commande 7 et, le cas échéant, les dispositifs de détection de givre, peuvent être connectés de manière filaire (ex : par câble) ou sans fil, notamment par une liaison sans fil de courte portée du type Bluetooth^{®}, ANT^{®}, ZigBee^{®}, etc.

La figure 2 illustre un premier mode de réalisation d'un actionneur piézoélectrique 9. L'actionneur 9 est configuré pour produire une énergie mécanique lorsqu'un champ électrique lui est imposé. Il comprend une structure d'empilement d'éléments piézoélectriques 91 (également désigné dans la suite par l'expression « pilier piézoélectrique »). Les éléments piézoélectriques 91 se présentent avantageusement sous la forme de rondelles ou disques pièzocéramiques ou piezocomposites dont le diamètre est par exemple compris entre 3 mm et 50 mm. Le nombre de rondelles ou disques peut varier de 2 à 400 selon la longueur du pilier (qui peut être comprise entre 2 mm et 300 mm) et/ou selon la force mécanique à générer. À titre d'exemple, on utilise des rondelles céramiques dures PZT (Titano-Zirconate de Plomb). Le pilier 9 peut être résiné au moment de son montage, hors de la pièce à dégivrer, augmentant sa durabilité en le protégeant davantage de l'humidité, de la poussière, et d'autres conditions environnementales.

Lorsque l'actionneur 9 est mis sous tension, ses éléments piézoélectriques 91 se déforment élastiquement pour générer une contrainte mécanique. La déformation élastique consiste en un allongement du pilier piézoélectrique selon l'axe longitudinal X-X de l'actionneur 9. En d'autres termes, l'actionneur 9 s'allonge (extension) lorsqu'il est mis sous tension. Et lorsqu'il n'est pas mis sous tension, l'actionneur 9 se rétracte (contraction) et revient à sa position d'origine. À titre d'exemple, le pilier piézoélectrique est configuré de sorte que son débattement entre les phases d'extension et de contraction soit compris entre 1 µm et 150 µm.

L'actionneur 9 est préférentiellement précontraint pour améliorer la robustesse et la tenue mécanique du pilier piézoélectrique. Selon un mode de réalisation, des éléments de visserie sont en prise avec une tige 92 passant au travers des éléments 91, de manière à appliquer une précontrainte sur le pilier piézoélectrique, par compression dudit pilier. Sur la figure 2, l'axe de la tige 92 coïncide avec l'axe longitudinal X-X.

L'axe longitudinal X-X de l'actionneur 9 est parallèle à la surface 3B (abstraction faite des tolérances géométriques et/ou de montage). Par « parallèle », on entend parallèle au plan contenant la zone de la surface 3B située en vis-à-vis de l'actionneur 9 lorsque ladite surface est plane dans ladite zone. Si la surface 3B est courbe dans cette zone, on entend par « parallèle » le fait que l'axe longitudinal X-X est perpendiculaire à la normale N à ladite surface passant par le milieu de l'actionneur 9, ou plus grossièrement que l'actionneur 9 est tangent à ladite surface 3B.

Un dispositif de fixation 11 est configuré pour fixer l'actionneur 9 de sorte que l'axe longitudinal X-X soit parallèle à la surface 3B. Le dispositif de fixation 11 comprend un premier élément de fixation 11A positionné au niveau d'une première extrémité 9A du pilier 9, et un deuxième élément de fixation 11B positionné au niveau de la seconde extrémité 9B dudit pilier. Selon une caractéristique avantageuse de l'invention, les éléments de fixation 11A, 11B se présentent chacun sous la forme d'équerre ou de pièce en L, afin d'assurer simplement un bon parallélisme entre l'axe longitudinal X-X de l'actionneur 9 et la surface 3B. Les éléments de fixation 11A, 11B peuvent être réalisés en métal ou en toute autre matière convenant à l'homme du métier et permettant de leur conférer une rigidité suffisante pour transmettre les contraintes mécaniques de l'actionneur 9 à la pièce 1.

Les éléments de fixation 11A, 11B peuvent être rigidement fixés aux extrémités 9A, 9B au moyen de soudure ou au moyen d'éléments de visserie qui peuvent être les mêmes que ceux en prise avec la tige 92 et servant à précontraindre le pilier 9, ou des éléments de visserie distincts. De même, les éléments de fixation 11A, 11B peuvent être rigidement fixés sur la surface 3B au moyen d'éléments de visserie ou au moyen de soudure. La mise en place et la fixation du système de dégivrage sur la surface 3B est ainsi très simple et très rapide.

Dans cette configuration particulière où l'actionneur 9 est installé parallèlement à la surface 3B et fixé à chacune de ces extrémités 9A, 9B, la pièce 1 va pouvoir être excitée selon des modes de flexion et d'extension. L'extension et la contraction du pilier 9 selon l'axe longitudinal X-X induisent des forces d'extension F parallèles audit axe longitudinal et qui sont principalement transmises dans la pièce 1 par les éléments 11A, 11B. Ces forces d'extension F tendent à générer la formation de craquelures à la surface du givre G et une fracturation de celui-ci, pouvant aller jusqu'à le délaminer. Ces forces d'extension F induisent également des moments fléchissants Mf (selon l'axe y sur la figure 2) au niveau des zones de fixation des éléments 11A, 11B, qui agissent comme bras de levier. Ces moments fléchissants Mf provoquent une excitation en flexion de la pièce 1 (ou à tout le moins de la surface 3B) permettant une fracturation et une délamination du givre G. La pièce 1 peut ainsi être excitée selon deux types de modes de façon à optimiser les vibrations de la structure afin d'éliminer rapidement et efficacement le givre G.

Les éléments de fixation 11A, 11B agissant comme bras de levier, la distance d séparant le pilier 9 de la surface 3B joue un rôle important dans l'excitation en flexion. En effet, plus la distance d est importante, plus l'intensité de cette excitation en flexion sera importante. De façon opposée, si la distance d est proche de 0, l'intensité de l'excitation en flexion sera minimale, voire nulle. Aussi, selon un mode de réalisation avantageux, la distance d est comprise entre 0 mm et 10 mm, préférentiellement entre 3 mm et 8 mm. Cette distance d peut être prédéterminée ou réglable, par exemple en utilisant un système de trous oblongs ménagés dans les éléments 11A, 11B et dans lesquels se positionnent les extrémités 9A, 9B. La distance d optimale peut être définie de manière empirique en fonction des caractéristiques du givre G (ex : sa composition, sa microstructure) et/ou de la pièce 1 et/ou selon les modes d'excitation en extension et en flexion à privilégier pour éliminer le givre G.

L'activation de l'actionneur 9 est réalisée par la mise sous tension de ses éléments piézoélectriques 91. Cette mise sous tension est gérée par l'unité de commande 7. À titre d'exemple, le signal de commande généré par l'unité de commande 7 et appliqué à l'actionneur 9 peut avoir une tension comprise entre 20 V et 400 V, sous une intensité de 1 mA à 10 A. Selon un mode de réalisation, la bande de fréquence d'activation de l'actionneur 9 (fréquence des phases d'extension et de contraction du pilier) est comprise entre 1 KHz et 150 KHz et peut atteindre 200 KHz. L'unité de commande 7 peut adapter le signal de commande, en tension et/ou en intensité (ex : signal de commande sinusoïdale ou carré) pour optimiser les performances en termes de contraintes mécaniques générées et/ou de fréquences vibratoires, etc.

L'actionneur 9 de la figure 2 n'a pas besoin d'être activé à sa fréquence de résonnance propre pour être efficace. Les meilleurs résultats en termes d'efficacité de dégivrage sont obtenus lorsque la fréquence des vibrations générées par l'actionneur 2 correspond à une ou plusieurs fréquences de résonnance de la pièce 1 à dégivrer. Ces fréquences de résonnance dépendent essentiellement de la géométrie, du matériau et de l'épaisseur de la pièce 1 et de l'épaisseur e du givre G sur ladite pièce.

De par sa conception, l'actionneur 9 de la figure 2 peut être excité sur une large bande de fréquence (par exemple entre 1 KHz et 150 KHz), ce qui offre une large amplitude de réglage en fonction de l'épaisseur du givre. Sa fréquence d'activation peut ainsi être facilement réglée pour s'accorder à au moins une des fréquences de résonnance de la pièce à dégivrer.

En outre, le fait que l'actionneur 9 puisse être excité sur une large bande de fréquences permet de simplifier la conception du système de dégivrage. En effet, dans certaines installations, le système de dégivrage peut comporter plusieurs actionneurs disposés sur différentes pièces. Par exemple, une aile d'avion est généralement formée par différentes plaques dont la taille et/ou la forme peut varier. Pour une installation du système de dégivrage sur cette aile d'avion, des actionneurs 9 sont fixés sur tout ou partie de ces plaques (c.-à-d. les pièces mécaniques au sens de l'invention). Il n'est alors pas nécessaire de dimensionner spécifiquement chacun des actionneurs en fonction de la taille et/ou de la forme de la plaque sur laquelle il est fixé. Les actionneurs peuvent au contraire tous être identiques, et par exemple dimensionnés pour fonctionner sur la même plage comprise entre 30 KHz et 60 KHz. Il suffit alors de régler de manière singulière la fréquence d'activation de chacun des actionneurs pour l'accorder spécifiquement à au moins une des fréquences de résonnance de la plaque correspondante.

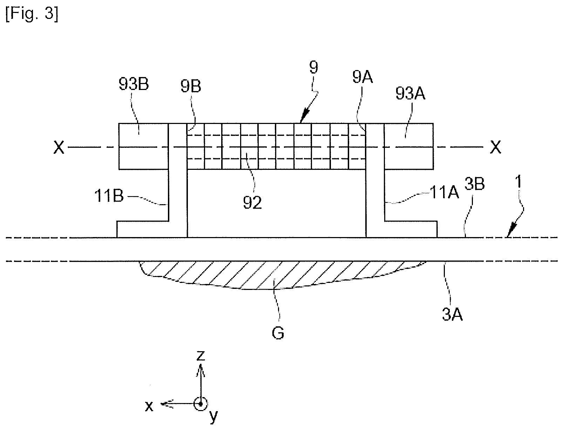

Lorsqu'une pièce 1 à dégivrer doit être excitée avec une densité de puissance plus importante dans l'actionneur (à cause de sa taille et/ou de sa forme et/ou de son matériau et/ou de l'épaisseur du givre G), l'actionneur 9 peut comporter des contrepoids. Il s'agit du second mode de réalisation illustré sur la figure 3. Un premier contrepoids 93A est positionné au niveau de la première extrémité 9A du pilier 9, et un deuxième contrepoids 93B est positionné au niveau de la seconde extrémité 9B dudit pilier. Chaque extrémité du pilier 9 est ainsi pourvue d'un contrepoids. Ces contrepoids 93A, 93B sont identiques et disposés symétriquement par rapport au milieu du pilier 9 de sorte que l'ensemble est équilibré. Les contrepoids 93A, 93B peuvent être fixés rigidement sur la tige 92 ou sur les éléments de fixation 11A, 11B, par exemple au moyen d'éléments de visserie ou au moyen de soudures. La masse des contrepoids 93A, 93B dépend de la fréquence de résonance recherchée pour l'actionneur et peut par exemple varier de 10 g à 500 g. En particulier, la masse des contrepoids 93A, 93B est choisie de façon à faire correspondre la fréquence de résonance de l'actionneur 9 avec la fréquence de résonance d'un mode de vibration de la pièce à dégivrer.

Un actionneur 9 selon la figure 3 fonctionne de manière optimale lorsqu'il est activé à sa propre fréquence de résonnance, mais offre de bons résultats en termes de dégivrage pour des fréquences d'activation inférieures à sa fréquence de résonnance. Aussi, ce type d'actionneur 9 est préférentiellement utilisé lorsqu'une ou plusieurs fréquences de résonnance de la pièce à dégivrer ne varient pas significativement selon l'épaisseur du givre G. L'actionneur 9 est alors configuré (notamment par le choix des masses des contrepoids 93A, 93B) de sorte que sa fréquence de résonnance propre soit accordée à au moins une de ces fréquences de résonnance de la pièce à dégivrer.

Quel que soit son mode de réalisation, l'actionneur 9 peut également être utilisé pour détecter et mesurer, ou à tout le moins évaluer, l'épaisseur e du givre G. Selon un mode de réalisation, cette information sur la présence et/ou l'épaisseur du givre G est utilisée comme donnée d'entrée du processus d'activation du système de dégivrage : si la valeur de l'épaisseur mesurée/évaluée est inférieure à une valeur seuil, alors le mode dégivrage n'est pas activé. A contrario, si la valeur de l'épaisseur mesurée/évaluée est supérieure ou égale à une valeur seuil, alors le mode dégivrage est activé. Et la fréquence d'activation de l'actionneur 9 pourra être adaptée à cette épaisseur mesurée/évaluée.

Selon un mode de réalisation, la détection et la mesure d'épaisseur de givre sont basées sur une analyse des données d'impédance de l'actionneur 9, afin d'effectuer une identification d'une ou plusieurs fréquences de résonnance de la pièce 1. Cette analyse est préférentiellement réalisée par l'unité 7.

La fréquence de résonnance Fe de la pièce 1, sans givre, à un mode de résonnance est du type : $Fe = C \times \sqrt{\frac{k}{m}}$ Où : C est un coefficient, K la raideur modale de la pièce et m la masse modale de ladite pièce.

En se rapportant à la figure 4, la courbe (en trait plein) d'impédance Z de l'actionneur 9 au voisinage de cette fréquence de résonnance Fe présente un creux (Fm) et un pic (Fn) caractéristiques. L'impédance Z correspond au rapport entre la tension U et l'intensité I du courant électrique appliqué au pilier piézoélectrique 9 (Z=U/I). Les valeurs de cette courbe d'impédance de référence sont enregistrées dans une zone mémoire du système qui peut être la zone mémoire de l'unité 7 ou une autre zone mémoire dédiée.

En cas de givre, la fréquence de résonnance Fe' de la pièce 1 devient : $Fe ′ = C \times \sqrt{\frac{k ′}{m ′}}$ Où : k'>k (le givre s'incrustant à la surface 3B, la pièce 1 devient plus raide) et m'>m (m'=m+m_{G}, avec m_{G} la masse de givre).

Selon un mode de réalisation particulièrement avantageux, la détection de givre est réalisée en activant le pilier piézoélectrique 9 avec une valeur de tension qui est basse, c'est-à-dire comprise entre 1 mV et 10 V. Le pilier 9 est activé sur une plage de fréquences autour de la fréquence de résonnance Fe, par exemple sur la plage [X.Fe ; Y.Fe], avec 0,1≤X≤0,9 et 1, 1≤Y≤2. L'impédance du pilier 9 est alors mesurée à chaque fréquence balayée de la plage de fréquence.

Les valeurs mesurées sont ensuite comparées par l'unité 7 avec celles de la courbe d'impédance de référence. Si la courbe d'impédance mesurée coïncide avec la courbe d'impédance de référence, alors c'est qu'il n'y a pas de givre sur la pièce 1. À l'inverse, une déviation ΔF de la courbe d'impédance mesurée (en pointillés sur la figure 4) de la courbe d'impédance de référence (décalage en fréquence), indique la présence de givre sur la pièce 1.

La valeur de cette déviation ΔF permet de mesurer/évaluer l'épaisseur du givre. En effet, des séries de mesures d'impédance peuvent préalablement être réalisées avec différentes épaisseurs de givre et stockées dans une zone mémoire du système. Aussi, une comparaison des valeurs mesurées avec ces valeurs connues permet à l'unité 7 de déduire l'épaisseur du givre, ainsi que la fréquence de résonnance de la pièce 1 à dégivrer.

La figure 5 montre un exemple d'architecture du système combinant la fonction dégivrage à la fonction détection de givre. L'actionneur 9 est connecté à l'unité de commande 7. Un commutateur 17 a pour fonction de faire basculer le système entre le « mode dégivrage » et le mode « détection de givre ». Le commutateur 17 peut être activé manuellement ou automatiquement par l'unité 7. Dans une première position, ce commutateur 17 permet de connecter l'actionneur 9 à un premier circuit 19 comprenant un générateur haute tension 21 (ex : 20 V à 400 V) utilisé pour activer ledit actionneur en mode dégivrage. Dans une deuxième position, le commutateur 17 est connecté à un deuxième circuit 23 comprenant un générateur basse tension 24 (ex : 1 mV à 10 V) utilisé pour activer l'actionneur 9 en mode détection de givre. Le deuxième circuit 23 comporte également un moyen d'analyse d'impédance 25 qui peut par exemple simplement consister en un ampèremètre adapté pour mesurer l'intensité traversant l'actionneur 9. Les données d'analyse d'impédance sont utilisées par l'unité 7 pour déclencher la commutation du commutateur 17. Les circuits 19 et 23 peuvent se présenter sous la forme de cartes électroniques connectées à l'unité 7.

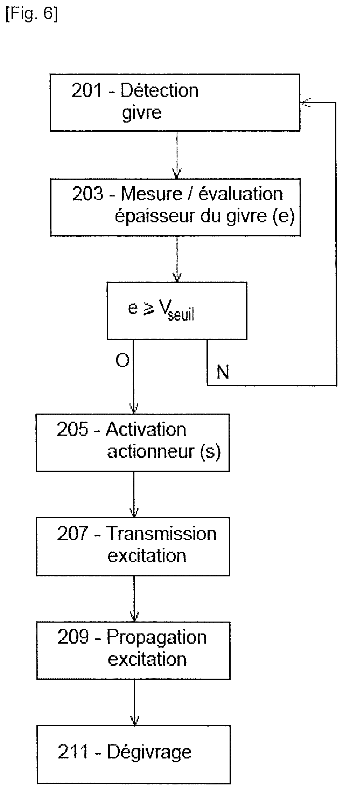

La figure 6 reprend les différentes étapes du procédé de dégivrage selon l'invention. Les étapes 201 et 203 sont facultatives.

Ce procédé comprend une première étape 201 de détection de givre G sur la pièce 1. Le commutateur 17 sélectionne le deuxième circuit 23. Le pilier 9 est activé en basse tension sur une plage de fréquences prédéfinie de manière à faire des mesures d'impédance comme expliquées précédemment. L'analyse d'impédance permet de détecter ou pas la présence de givre.

Une seconde étape 203 permet de mesurer/évaluer l'épaisseur e du givre G, à partir des mesures d'impédance. Si la valeur e d'épaisseur de givre mesurée/évaluée est inférieure à une valeur seuil Vₛₑᵤᵢₗ prédéterminée (par exemple 0.3 mm), le commutateur 17 n'est pas commuté et le dégivrage de la pièce 1 n'est pas activé. En revanche, si la valeur e d'épaisseur de givre mesurée/évaluée est égale ou supérieure à la valeur seuil Vₛₑᵤᵢₗ, alors le commutateur 17 est commuté le dégivrage est activé. Dans ce cas, le commutateur 17 est basculé pour sélectionner le premier circuit 19.

Une troisième étape 205 consiste à activer le ou les actionneurs 9. Les actionneurs 9 peuvent être activés localement, si l'analyse de l'épaisseur de givre est localisée, ou sur l'ensemble de la pièce 1. La fréquence d'activation pourra être pré-paramétrée ou préférentiellement réglée selon l'épaisseur de givre mesurée/évaluée de sorte que la fréquence d'activation coïncide avec la fréquence de résonnance de la pièce 1 présentant du givre.

Une quatrième étape 207 correspond à la transmission de l'excitation, produite par le ou les actionneurs piézoélectriques 9 à la pièce 1 par l'intermédiaire des éléments de fixation 11A, 11B.

Une cinquième étape 209 correspond à la propagation de l'excitation dans la pièce 1. Dans le cadre de l'invention, l'excitation transmise par le ou les actionneurs 9 est en flexion et en extension. Cette propagation peut être localisée dans une zone précise de la pièce 1 ou être transmise à l'ensemble de la pièce 1.

L'étape 209 conduit à la sixième et dernière étape 211 de dégivrage. L'excitation de la pièce 1 permet une fracturation et une délamination du givre par vibration selon un ou plusieurs de ses modes de vibration.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'objet de l'invention tel que défini dans les revendications annexées.

En outre, une ou plusieurs caractéristiques exposées seulement dans un mode de réalisation peuvent être combinées avec une ou plusieurs autres caractéristiques exposées seulement dans un autre mode de réalisation, dans la mesure où elles entrent dans le champ d'application des revendications annexées. De même, une ou plusieurs caractéristiques exposées seulement dans un mode de réalisation peuvent être généralisées aux autres modes de réalisation, même si ce ou ces caractéristiques sont décrites seulement en combinaison avec d'autres caractéristiques, dans la mesure où elles entrent dans le champ d'application des revendications annexées.

L'usage du verbe « comporter », « comprendre » ou « inclure » et de ses formes conjuguées n'exclut pas la présence d'autres éléments ou d'autres étapes que ceux énoncés dans une revendication.

## Revendications

1. Système de dégivrage configuré pour être monté sur une surface (3A, 3B) d'une pièce mécanique (1) à dégivrer, ledit système comprenant au moins :
- un actionneur piézoélectrique (9),
- un dispositif de fixation (11) configuré pour fixer l'actionneur (9) sur la surface (3A, 3B),
- au moins une unité de commande (7) configurée pour activer l'actionneur (9) selon des phases d'extension lorsqu'il est sous tension et selon des phases de contraction lorsqu'il n'est pas mis sous tension et revient à sa position d'origine, de manière à ce qu'il excite la pièce (1) pour la dégivrer,
dans lequel:
- l'actionneur (9) comprend une structure d'empilement d'éléments piézoélectriques (91) précontraints agissant selon un axe longitudinal (X-X) dudit actionneur,
- le dispositif de fixation (11) est configuré pour fixer rigidement l'actionneur (9) de sorte que l'axe longitudinal (X-X) soit parallèle à la surface (3A, 3B),
**caractérisé en ce que**:
le dispositif de fixation (11) comprend un premier élément de fixation (11A) positionné au niveau d'une première extrémité (9A) de l'actionneur (9), et un deuxième élément de fixation (11B) positionné au niveau d'une seconde extrémité (9B) dudit actionneur, lesquels éléments de fixation sont, en usage, fixés sur la surface (3A, 3B) de la pièce (1) à dégivrer,
les éléments de fixation sont configurés de sorte que l'activation dudit actionneur entraîne l'excitation de la pièce (1) à dégivrer selon des modes d'extension et de flexion, l'extension et la contraction de l'actionneur (9) selon l'axe longitudinal (X-X) induisent des forces d'extension (F) parallèles audit axe longitudinal,
lesdites forces d'extension induisent également des moments fléchissants (Mf) au niveau de la zone de fixation du premier élément de fixation (11A) et au niveau de la zone de fixation du deuxième élément de fixation (11B), lesquels éléments de fixation agissent comme bras de levier et provoquent une excitation en flexion de la pièce (1) à dégivrer.

2. Système de dégivrage selon la revendication 1,
**caractérisé en ce que** le premier élément de fixation (11A) et le deuxième élément de fixation (11B) se présentent chacun sous la forme d'équerre ou de pièce en L.

3. Système de dégivrage selon la revendication 2,
**caractérisé en ce que** la fixation de l'actionneur (9) au moyen des éléments de fixation (11A, 11B) est telle que la distance (d) entre ledit actionneur et la surface (3A, 3B) est comprise entre 0 et 10 mm, préférentiellement entre 3 mm et 8 mm.

4. Système de dégivrage selon la revendication 3,
**caractérisé en ce que** la distance (d) est réglable.

5. Système de dégivrage selon l'une des revendications précédentes, **caractérisé en ce que** l'unité de commande (7) est configurée pour activer l'actionneur (9) selon une fréquence comprise entre 1 KHz et 200 KHz et selon une tension comprise entre 100 V et 400 V.

6. Système de dégivrage selon l'une des revendications précédentes, **caractérisé en ce que** l'unité de commande (7) est configurée pour activer l'actionneur (9) à une fréquence inférieure ou égale à sa fréquence de résonance.

7. Système de dégivrage selon l'une des revendications précédentes, **caractérisé en ce qu'**un contrepoids (93A, 93B) est positionné à chacune des deux extrémités (9A, 9B) de l'actionneur (9), lesdits contrepoids étant identiques et disposés symétriquement par rapport au milieu dudit actionneur.

8. Système de dégivrage selon la revendication 7, **caractérisé en ce que** la masse des contrepoids (93A, 93B) est telle que la fréquence de résonance de l'actionneur (9) correspond à la fréquence de résonance d'un mode de vibration de la pièce (1) à dégivrer.

9. Système de dégivrage selon l'une des revendications précédentes, **caractérisé en ce que** l'actionneur (9) est connecté à :
- un premier circuit (19) configuré pour activer ledit actionneur en mode dégivrage, et
- un deuxième circuit (23) configuré pour faire fonctionner ledit actionneur selon un mode de détection de givre (G).

10. Système de dégivrage selon la revendication 9,
**caractérisé en ce que** le deuxième circuit (23) comprend un générateur de tension (24) utilisé pour activer l'actionneur (9) selon une tension comprise entre 1 mV et 10 V et un moyen d'analyse d'impédance (25) dudit actionneur.

11. Système de dégivrage selon la revendication 10,
**caractérisé en ce que** les données d'analyse d'impédance de l'actionneur (9) sont utilisées par l'unité de commande (7) pour mesurer et/ou évaluer l'épaisseur (e) du givre (G) sur la pièce (1).

12. Système de dégivrage selon l'une des revendications 9 à 11, **caractérisé en ce que** l'unité de commande (7) est couplée à un commutateur (17) présentant au moins deux positions : une première position dans laquelle l'actionneur (9) est connecté au premier circuit (19) configuré pour faire fonctionner ledit actionneur selon un mode de dégivrage, et une deuxième position dans laquelle ledit actionneur est connecté au deuxième circuit (23) configuré pour faire fonctionner ledit actionneur selon le mode de détection de givre (G).

13. Système de dégivrage selon les revendications 11 et 12, **caractérisé en ce que** le commutateur (17) est commuté dans la première position qu'à la condition que l'épaisseur (e) du givre (G) mesurée et/ou évaluée est égale ou supérieure à une valeur seuil prédéterminée.

14. Procédé de dégivrage d'une pièce mécanique (1), comprenant les étapes suivantes :
- transmission d'une excitation (207) à la pièce mécanique (1) par un ou plusieurs actionneurs piézoélectriques (9) d'un système de dégivrage,
- propagation de l'excitation (209) dans la pièce mécanique (1), de manière à permettre le dégivrage de la pièce (1),
**caractérisé en ce que :**
- le système de dégivrage est conforme à l'une des revendications précédentes,
- le procédé comprend une étape d'activation (205) du ou des actionneurs piézoélectriques (9) par l'unité de commande (7), à condition que l'épaisseur (e) de givre (G) sur la pièce (1) soit égale ou supérieure à une valeur seuil, l'étape d'activation (205) étant antérieure à l'étape de transmission de l'excitation (207).

15. Procédé de dégivrage selon la revendication 14, **caractérisé en ce que** le procédé comprend, en outre, une étape de détection (201) de givre (G) sur la pièce (1) antérieure à l'étape d'activation (205).

16. Procédé de dégivrage selon la revendication 15, **caractérisé en ce que** le procédé comprend une étape de mesure et/ou d'évaluation (203) de l'épaisseur (e) du givre (G), située entre l'étape de détection (201) et l'étape d'activation (205).

17. Pièce mécanique (1) comprenant au moins un système de dégivrage, **caractérisée en ce que** le système de dégivrage est positionné sur une surface interne (3B) ou externe (3A) de la pièce (1), ledit système étant conforme à l'une des revendications 1 à 13.

18. Pièce mécanique selon la revendication 17, **caractérisée en ce que** ladite pièce est une pale d'éolienne ou d'aéronef, ou une aube de turbomachine d'aéronef.

## Patentansprüche

1. Enteisungssystem, das so konfiguriert ist, dass es an einer Oberfläche (3A, 3B) eines zu enteisenden mechanischen Teils (1) anbringbar ist, wobei das System mindestens umfasst:
- einen piezoelektrischen Aktuator (9),
- eine Befestigungsvorrichtung (11), die so konfiguriert ist, dass sie den Aktuator (9) an der Oberfläche (3A, 3B) befestigt,
- mindestens eine Steuereinheit (7), die so konfiguriert ist, dass sie den Aktuator (9) in Ausdehnungsphasen aktiviert, wenn er unter Spannung steht, und in Kontraktionsphasen, wenn er nicht unter Spannung steht und in seine Ausgangsposition zurückkehrt, so dass er das Teil (1) zum Enteisen anregt,
wobei:
- der Aktuator (9) eine Stapelstruktur aus vorgespannten piezoelektrischen Elementen (91) umfasst, die gemäß einer Längsachse (X-X) des Aktuators wirken,
- die Befestigungsvorrichtung (11) so konfiguriert ist, dass sie den Aktuator (9) starr befestigt, so dass die Längsachse (X-X) parallel zu der Oberfläche (3A, 3B) ist,
**dadurch gekennzeichnet, dass**:
die Befestigungsvorrichtung (11) ein erstes Befestigungselement (11A) umfasst, das im Bereich eines ersten Endes (9A) des Aktuators (9) positioniert ist, und ein zweites Befestigungselement (11B), das im Bereich eines zweiten Endes (9B) des Aktuators positioniert ist, wobei die Befestigungselemente im Gebrauch an der Oberfläche (3A, 3B) des zu enteisenden Teils (1) befestigt sind,
die Befestigungselemente so konfiguriert sind, dass die Aktivierung des Aktuators die Anregung des zu enteisenden Teils (1) gemäß Ausdehnungs- und Biegemodi bewirkt, wobei die Ausdehnung und die Kontraktion des Aktuators (9) gemäß der Längsachse (X- X) parallel zu dieser Längsachse Ausdehnungskräfte (F) induzieren,
die Ausdehnungskräfte ebenfalls Biegemomente (Mf) im Bereich des Befestigungsbereichs des ersten Befestigungselements (11A) und im Bereich des Befestigungsbereichs des zweiten Befestigungselements (11B) induzieren, wobei die Befestigungselemente als Hebelarme wirken und eine Biegeanregung des zu enteisenden Teils (1) bewirken.

2. Enteisungssystem nach Anspruch 1, **dadurch gekennzeichnet, dass** das erste Befestigungselement (11A) und das zweite Befestigungselement (11B) jeweils in Form eines Winkels oder L-Stücks vorliegen.

3. Enteisungssystem nach Anspruch 2, **dadurch gekennzeichnet, dass** die Befestigung des Aktuators (9) mittels der Befestigungselemente (11A, 11B) derart ist, dass der Abstand (d) zwischen dem Aktuator und der Oberfläche (3A, 3B) zwischen 0 und 10 mm, vorzugsweise zwischen 3 mm und 8 mm liegt.

4. Enteisungssystem nach Anspruch 3,
**dadurch gekennzeichnet, dass** der Abstand (d) einstellbar ist.

5. Enteisungssystem nach einem der vorhergehenden Ansprüche, **dadurch gekennzeichnet, dass** die Steuereinheit (7) so konfiguriert ist, dass sie den Aktuator (9) gemäß einer Frequenz zwischen 1 kHz und 200 kHz und gemäß einer Spannung zwischen 100 V und 400 V aktiviert.

6. Enteisungssystem nach einem der vorhergehenden Ansprüche, **dadurch gekennzeichnet, dass** die Steuereinheit (7) so konfiguriert ist, dass sie den Aktuator (9) mit einer Frequenz aktiviert, die kleiner oder gleich seiner Resonanzfrequenz ist.

7. Enteisungssystem nach einem der vorhergehenden Ansprüche, **dadurch gekennzeichnet, dass** an jedem der beiden Enden (9A, 9B) des Aktuators (9) ein Gegengewicht (93A, 93B) positioniert ist, wobei die Gegengewichte identisch und symmetrisch zur Mitte des Aktuators angeordnet sind.

8. Enteisungssystem nach Anspruch 7, **dadurch gekennzeichnet, dass** die Masse der Gegengewichte (93A, 93B) derart ist, dass die Resonanzfrequenz des Aktuators (9) der Resonanzfrequenz eines Schwingungsmodus des zu enteisenden Teils (1) entspricht.

9. Enteisungssystem nach einem der vorhergehenden Ansprüche, **dadurch gekennzeichnet, dass** der Aktuator (9) verbunden ist mit:
- einem ersten Kreis (19), der so konfiguriert ist, dass er den Aktuator im Enteisungsmodus aktiviert, und
- einem zweiten Kreis (23), der so konfiguriert ist, dass er den Aktuator in einem Eiserkennungsmodus (G) betätigt.

10. Enteisungssystem nach Anspruch 9,
**dadurch gekennzeichnet, dass** der zweite Kreis (23) einen Spannungsgenerator (24) umfasst, der verwendet wird, um den Aktuator (9) mit einer Spannung zwischen 1 mV und 10 V zu aktivieren, und ein Impedanzanalysemittel (25) des Aktuators.

11. Enteisungssystem nach Anspruch 10, **dadurch gekennzeichnet, dass** die Impedanzanalysedaten des Aktuators (9) von der Steuereinheit (7) verwendet werden, um die Dicke (e) des Eises (G) am Teil (1) zu messen und/oder zu bewerten.

12. Enteisungssystem nach einem der Ansprüche 9 bis 11, **dadurch gekennzeichnet, dass** die Steuereinheit (7) mit einem Schalter (17) gekoppelt ist, der mindestens zwei Positionen aufweist: eine erste Position, in der der Aktuator (9) mit dem ersten Kreis (19) verbunden ist, der so konfiguriert ist, dass der Aktuator in einem Enteisungsmodus betrieben wird, und eine zweite Position, in der das Aktuator mit dem zweiten Kreis (23) verbunden ist, der so konfiguriert ist, dass der Aktuator in dem Eiserkennungsmodus (G) betrieben wird.

13. Enteisungssystem nach den Ansprüchen 11 und 12, **dadurch gekennzeichnet, dass** der Schalter (17) nur dann in die erste Position geschaltet wird, wenn die gemessene und/oder bewertete Dicke (e) des Eises (G) gleich oder größer als ein vorbestimmter Schwellenwert ist.

14. Verfahren zum Enteisen eines mechanischen Teils (1), das die folgenden Schritte umfasst:
- Übertragen einer Anregung (207) an das mechanische Teil (1) durch einen oder mehrere piezoelektrische Aktuatoren (9) eines Enteisungssystems,
- Ausbreiten der Anregung (209) in dem mechanischen Teil (1), so dass das Enteisen des Teils (1) ermöglicht wird,
**dadurch gekennzeichnet, dass**
- das Enteisungssystem einem der vorhergehenden Ansprüche entspricht,
- das Verfahren einen Schritt (205) der Aktivierung des oder der piezoelektrischen Aktuatoren (9) durch die Steuereinheit (7) umfasst, vorausgesetzt, dass die Dicke (e) des Eises (G) auf dem Teil (1) gleich oder größer als ein Schwellenwert ist, wobei der Aktivierungsschritt (205) dem Schritt der Anregungsübertragung (207) vorausgeht.

15. Enteisungsverfahren nach Anspruch 14, **dadurch gekennzeichnet, dass** das Verfahren ferner einen Schritt (201) des Erkennens von Eis (G) auf dem Teil (1) vor dem Aktivierungsschritt (205) umfasst.

16. Enteisungsverfahren nach Anspruch 15, **dadurch gekennzeichnet, dass** das Verfahren einen Schritt (203) des Messens und/oder Bewertens der Dicke (e) des Eises (G) umfasst, der sich zwischen dem Erkennungsschritt (201) und dem Aktivierungsschritt (205) befindet.

17. Mechanisches Teil (1), das mindestens ein Enteisungssystem umfasst, **dadurch gekennzeichnet, dass** das Enteisungssystem auf einer inneren (3B) oder äußeren (3A) Oberfläche des Teils (1) positioniert ist, wobei das System einem der Ansprüche 1 bis 13 entspricht.

18. Mechanisches Teil nach Anspruch 17, **dadurch gekennzeichnet, dass** das Teil ein Blatt einer Windkraftanlage oder eines Luftfahrzeugs oder eine Turbinenschaufel eines Luftfahrzeugs ist.

## Claims

1. De-icing system configured to be mounted on a surface (3A, 3B) of a mechanical part (1) to be de-iced, said system comprising at least:
- a piezoelectric actuator (9),
- a fastening device (11) configured to fasten the actuator (9) to the surface (3A, 3B),
- at least one control unit (7) configured to activate the actuator (9) according to extension phases when it is energised and according to contraction phases when it is not energised and returns to its original position, such that it energises the part (1) to de-ice it,
wherein:
- the actuator (9) comprises a stack structure of prestressed piezoelectric elements (91) acting along a longitudinal axis (X-X) of said actuator,
- the fastening device (11) is configured to rigidly fasten the actuator (9) so that the longitudinal axis (X-X) is parallel to the surface (3A, 3B),
**characterised in that**:
the fastening device (11) comprises a first fastening element (11A) positioned at a first end (9A) of the actuator (9), and a second fastening element (11B) positioned at a second end (9B) of said actuator, which fastening elements are, in use, fastened to the surface (3A, 3B) of the part (1) to be de-iced,
the fastening elements are configured such that activation of said actuator causes the part (1) to be de-iced to be excited according to extension and bending modes, the extension and contraction of the actuator (9) along the longitudinal axis (X- X) induce extension forces (F) parallel to said longitudinal axis,
said extension forces also induce bending moments (Mf) at the fastening region of the first fastening element (11A) and at the fastening region of the second fastening element (11B), which fastening elements act as lever arms and cause flexural excitation of the part (1) to be de-iced.

2. De-icing system according to Claim 1, **characterised in that** the first fastening element (11A) and the second fastening element (11B) are each in the form of a bracket or an L-piece.

3. De-icing system according to Claim 2,
**characterised in that** the actuator (9) is fastened by means of the fastening elements (11A, 11B) such that the distance (d) between said actuator and the surface (3A, 3B) is between 0 and 10 mm, preferably between 3 mm and 8 mm.

4. De-icing system according to Claim 3,
**characterised in that** the distance (d) is adjustable.

5. De-icing system according to one of the preceding claims, **characterised in that** the control unit (7) is configured to activate the actuator (9) according to a frequency between 1 KHz and 200 KHz and according to a voltage between 100 V and 400 V.

6. De-icing system according to one of the preceding claims, **characterised in that** the control unit (7) is configured to activate the actuator (9) at a frequency less than or equal to its resonance frequency.

7. De-icing system according to one of the preceding claims, **characterised in that** a counterweight (93A, 93B) is positioned at each of the two ends (9A, 9B) of the actuator (9), said counterweights being identical and arranged symmetrically with respect to the middle of said actuator.

8. De-icing system according to Claim 7,
**characterised in that** the mass of the counterweights (93A, 93B) is such that the resonance frequency of the actuator (9) corresponds to the resonance frequency of a vibration mode of the part (1) to be de-iced.

9. De-icing system according to one of the preceding claims, **characterised in that** the actuator (9) is connected to:
- a first circuit (19) configured to activate said actuator in de-icing mode, and
- a second circuit (23) configured to operate said actuator in an ice detection mode (G).

10. De-icing system according to Claim 9,
**characterised in that** the second circuit (23) comprises a voltage generator (24) used to activate the actuator (9) according to a voltage between 1mV and 10V and a means (25) for analysing impedance of said actuator.

11. De-icing system according to Claim 10, **characterised in that** the impedance analysis data for the actuator (9) is used by the control unit (7) to measure and/or assess the thickness (e) of the ice (G) on the part (1).

12. De-icing system according to one of Claims 9 to 11, **characterised in that** the control unit (7) is coupled to a switch (17) having at least two positions: a first position in which the actuator (9) is connected to the first circuit (19) configured to operate said actuator according to a de-icing mode, and a second position in which said actuator is connected to the second circuit (23) configured to operate said actuator according to an ice detection mode (G).

13. De-icing system according to Claims 11 and 12, **characterised in that** the switch (17) is switched into the first position only on the condition that the measured and/or assessed thickness (e) of the ice (G) is greater than or equal to a predetermined threshold value.

14. Method for de-icing a mechanical part (1), comprising the following steps:
- transmission of an excitation (207) to the mechanical part (1) by one or more piezoelectric actuator(s) (9) of a de-icing system,
- propagation of the excitation (209) in the mechanical part (1), so as to enable the de-icing of the part (1),
**characterised in that**:
- the de-icing system is according to one of the preceding claims,
- the method comprises a step (205) of activating the piezoelectric actuator(s) (9) by the control unit (7), on the condition that the thickness (e) of the ice (G) on the part (1) is greater than or equal to a threshold value, the activation step (205) being prior to the step of transmitting the excitation (207).

15. De-icing method according to Claim 14, **characterised in that** the method further comprises a step (201) of detecting ice (G) on the part (1) prior to the activation step (205).

16. De-icing method according to Claim 15, **characterised in that** the method comprises a step (203) of measuring and/or assessing the thickness (e) of the ice (G), carried out between the detection step (201) and the activation step (205).

17. Mechanical part (1) comprising at least one de-icing system, **characterised in that** the de-icing system is positioned on an inner (3B) or outer (3A) surface of the part (1), said system being according to one of Claims 1 to 13.

18. Mechanical part according to Claim 17, **characterised in that** said part is a wind turbine or aircraft blade, or a vane of an aircraft turbomachine.
